# EUROPEAN PATENT APPLICATION

(11) **EP 2 549 305 A1**
(43) Date of publication of application: **23.01.2013**
(21) Application number: 11174991.7
(22) Date of filing: 22.07.2011
(51) Int. Cl.: G02B 5/28, G02B 1/10, G06F 3/041, C03C 17/36

(54) **Conductive film**

(71) Applicant: Innovation & Infinity Global Corp., Hsinchu City (TW)
(72) Inventor: Chu, Chao-Chieh, 300 Hsinchu City (TW)
(74) Representative: Viering, Jentschura & Partner

(57) **Abstract**

The present invention discloses a conductive film (1) including a substrate (10), a hard coated layer (12), a first refraction layer (14), a second refraction layer (16), and a transparent conductive layer (18). The hard coated layer (12) may be disposed on the substrate (10) with the silicon-based material accounting for certain percentages of the weight thereof. Placement of the first refraction layer (14), the second refraction layer (16), and the transparent conductive layer (18) may be arranged in a predetermined order. The transparent conductive layer (18) may cover parts of the second refraction layer (16). When a light enters into the transparent conductive layer (20)/ the second refraction layer (16) of the conductive film (1) with an incident angle, the light may be associated with a first reflectance (R1)/ a second reflectance (R2). The difference between the first reflectance (R1) and the second reflectance (R2) is designed to be lower than a first threshold value. Accordingly, the present invention may eliminate the display difference between an etched and a non-etched area of the conductive film (1) and improve the visual quality.

## Description

### BACKGROUND OF THE INVENTION

### 1. Field of the Invention

The present invention relates to a conductive film; in particular, to a conductive film that is capable of eliminating display difference between an etched and a non-etched area.

### 2. Description of Related Art

As the technology progresses, electronic devices have been widely utilized in people's daily lives. For the electronic devices to receive inputs from human operators, traditional input devices such as keypads/keyboards are usually employed. However, touch panels (or touch-screens) have been emerging to at least somewhat become the primary option of the input device in certain electronic devices including mobile phones and tablet computers.

Applications of the touch panels include a variety of types such as resistive touch panel, capacitive touch panel, infrared touch panel, and ultrasonic-wave touch panel.

The traditional touch panels generally have a thin and transparent metallic layer serving as a conductive film deposited on a glass substrate. When the conductive film is touched, a corresponding signal such as an input has been received or which location of the conductive film has been touched may be recorded.

The thin and transparent metallic layer is manufactured through steps of lithography and etching process so as to form patterns of circuitry thereon. However, some traces will be formed after the completion of the etching process especially in the case where difference in reflection between the glass substrate and the transparent conductive layer is large enough to have a significant drop-off in terms of spectrum, which obscures the image to be displayed and undermines the quality of the display.

### SUMMARY OF THE INVENTION

The object of the present invention is to provide a conductive film having a hard coated layer. The thickness and the makeup of the hard coated layer may be adjusted to reduce the reflectance difference of different portions (i.e., the etched portion and the non-etched portion). The reduction may help eliminate the gap in the difference between those portions/areas. Therefore, the etched traces cannot be observed by the users so that the image quality of the conductive film is improved.

In order to achieve the aforementioned objects, according to an embodiment of the present invention, a conductive film is provided. The conductive film includes a substrate, the hard coated layer, a first refraction layer, a second refraction layer, and a transparent conductive layer. The hard coated layer may be disposed on the substrate and may be made of a silicon-based material. The first refraction layer, the second refraction layer, and the transparent conductive layer are disposed on the hard coated layer in a predetermined order with the transparent conductive layer partially covering the second refraction layer. When a light enters into the transparent conductive layer of the conductive film with an incident angle, the light may be associated with a first reflectance. When the light enters into the second refraction layer of the conductive film with the same incident angle, the light may be associated with a second reflectance. The difference between the first reflectance and the second reflectance could be lower than a first threshold value.

In an embodiment of the present invention, the hard coated layer may be one to three micrometers in thickness with the silicon-based material accounting for five to twenty-five percents of the weight thereof. In addition, the thickness of the first refraction layer is in the range of 100Å to 300Å, and refractive index of the first refraction layer is in the range of 1.6 to 2.0. The thickness of the second refraction layer is in the range of 500Å to 700Å, and refractive index of the second refraction layer is in the range of 1.42 to 1.46. Moreover, the substrate is made of glass material, PET material, or a mixture of the glass and the PET materials, and the refractive index of the substrate may be at 1.52.

To sum up, the conductive film of the present invention may lead to a reflectance and transmittance matching effect between the etched portion and the non-etched portion of the conductive film by properly selecting the thickness and the makeup of the hard coated layer to be within predetermined ranges. Therefore, the etched portion and the non-etched portion could be associated with similar reflection indexes so as to improve the image quality.

In order to further the understanding regarding the present invention, the following embodiments are provided along with illustrations to facilitate the disclosure of the present invention.

### BRIEF DESCRIPTION OF THE DRAWINGS

Fig. 1 shows a schematic diagram of a conductive film according to an embodiment of the present invention.

Fig. 2 shows a stereogram of the conductive film according to an embodiment of the present invention.

### DETAILED DESCRIPTION OF THE PREFERRED EMBODIMENTS

The aforementioned illustrations and following detailed descriptions are exemplary for the purpose of further explaining the scope of the present invention. Other objectives and advantages related to the present invention will be illustrated in the subsequent descriptions and appended drawings.

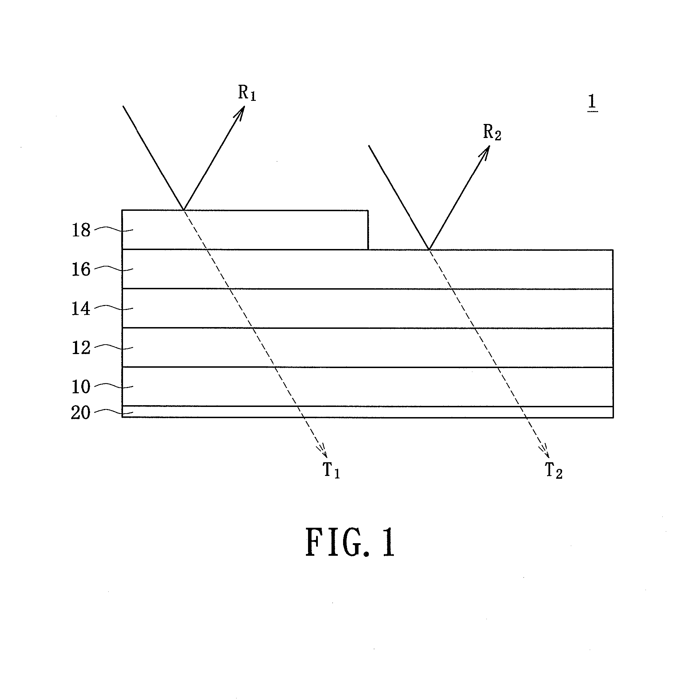

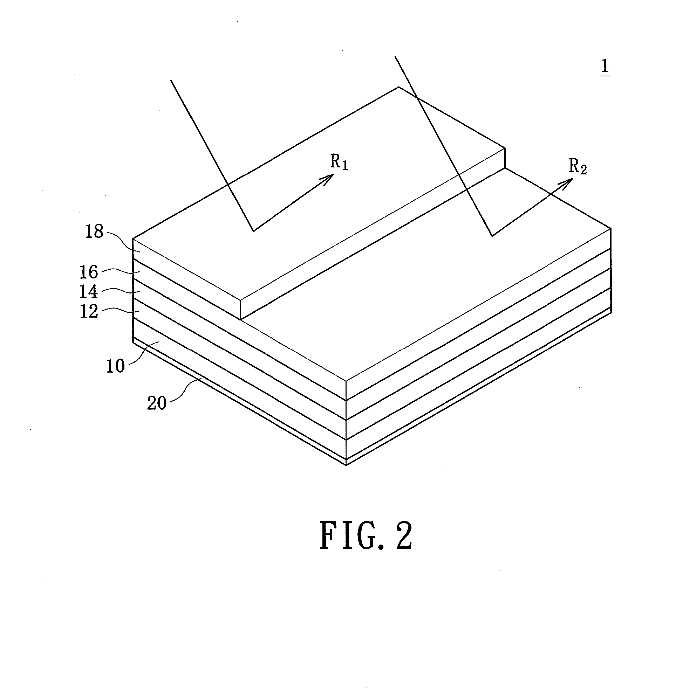

Referring to Fig. land Fig. 2, Fig. 1 shows a schematic diagram of a conductive film according to an embodiment of the present invention, and Fig. 2 shows a stereogram of the conductive film according to an embodiment of the present invention. A conductive film 1 of the present invention includes a substrate 10, a hard coated layer 12, a first refraction layer 14, a second refraction layer 16, and a transparent conductive layer 18.

In one implementation, the substrate 10 is made of glass and PET (polyethylene terephthalate) materials. For example, the substrate 10 can be made of acetylcellulose-based films such as diacetylcellulose films, triacetylcellulose films and acetylcellulose butyrate films, polycarbonate-based films, cyclic olefin-based films, acrylic resin-based films, polyester-based films such as polyethylene terephthalate films, polybutylene terephthalate films and polyethylene naphthalate films,polysulfone-based films, polyether sulfone-based films, polyether ether ketone-based films, polyimide-based films, and polyether imide-based films. In terms of light transmitting capability, mechanical property, lower water absorption, endurance to heat and tough weather condition, triacetylcellulose films, polycarbonate-based films, cyclic polyolefin-based films, acrylic resin-based films and polyethylene terephthalate films may be more desirable with acetylcellulose-based films, polycarbonate-based films, cyclic polyolefin-based films, acrylic resin-based films and polyester-based films may separate themselves from others in the same categories.

In practice, when the substrate 10 is made of glass and PET materials, a refractive index of the substrate may be at 1.52. Of course, person skilled in the art can choose from other materials to prepare compounds serving as the substrate 10 with the refractive index around 1.52. The thickness of the substrate 10 in one implementation is lower than 300µm. Besides, the hard coated layer 12, the first refraction layer 14, and the second refraction layer 16 may be disposed on one surface of the substrate 10, and an adhesive layer 20, for bonding the conductive film 1 to other devices, may be disposed on a surface of the substrate 10 that is opposite to the surface where the hard coated layer 12, the first refraction layer 14, and the second refraction layer 16 are placed with respect to the substrate 10. In one implementation, the adhesive layer 20 is made of materials with superior optical characteristics such as an acrylic adhesive, a urethane adhesive or a silicone adhesive.

The hard coated layer 12, the first refraction layer 14, and the second refraction layer 16 may be disposed on the substrate in a predetermined order. In one implementation, the hard coated layer 12 may be in contact with the substrate 10, the first refraction layer 14 may be disposed between the hard coated layer 12, and the second refraction layer 16, which may be in contact with the transparent conductive layer 18. The first refraction layer 14 may be a metallic oxide layer which is made of titanium oxide, ITO, tantalum oxide tin oxide, or combinations of any two of the aforementioned. The second refraction layer 16 may be a siloxane-based polymer layer which is made of inorganic silica-based compounds or polyorganosiloxane-based compounds or mixtures of these compounds.

It is worth noting that the thickness of the hard coated layer 12 may range between one to three micrometers. And the hard coated layer 12, which may be made of the silicon-based material, may be with the silicon accounting for five to twenty-five percents of the weight thereof. The hard coated layer 12 may further include carbon and hydrogen therein with no limitation upon corresponding weight percentages of the carbon and hydrogen, so long as the conductive film 1 may pass the endurance test.

In practice, by properly selecting the thickness and the refractive index of the hard coated layer 12, the first refraction layer 14, and the second refraction layer 16, the etched traces in the conductive film 1 formed over the course of the etching process may not be observable by human eyes, and the difference in color display may be minimized. In one implementation, when the thickness of the first refraction layer 14 is in the range of 100Å to 300Å, and the refractive index thereof is in the range of 1.6 to 2.0 and the thickness of the second refraction layer 16 is in the range of 500Å to 700Å, and the refractive index of the second refraction layer 16 is in the range of 1.42 to 1.46 the etched traces in the conductive film 1 formed over the course of the etching process and the difference in the color display may not be observable.

Since the transparent conductive layer 18 may be disposed on the second refraction layer 16, the transparent conductive layer 18 may be the outer-most layer of the conductive film 1. After the etching process, only predetermined areas of the transparent conductive layer 18 may be etched to form specific patterns and the transparent conductive layer 18 at the predetermined areas may be entirely etched away. Other areas of the transparent conductive layer 18 may continue overlapping the second refraction layer 16. In one implementation, the transparent conductive layer 18 may be made of SnO2, ZnO2, In2O3, or ITO, and the thickness of the transparent conductive layer 18 may range from 150Å to 250Å. More specifically, the thickness of the transparent conductive layer 18 may be 180Å when the transparent conductive layer 18 is made of ITO.

A refractive index of the transparent conductive layer 18 may be in the range of 1.9 to 2.1. Moreover, since the transparent conductive layer 18 may be associated with high conductivity the grounding process for the conductive film 1 may be simplified, increasing the yield in the manufacturing process. Also because of the conductivity of the transparent conductive layer 18, the electrode may be formed efficiently on the transparent conductive layer 18. Therefore, the present invention may be applicable to the touch panel. In practice, in order to prevent the etched traces from being observed, the thickness and the refractive index of the transparent conductive layer 18 shall be selected with the refractive index and the thickness of the hard coated layer 12, the first refraction layer 14, and the second refraction layer 16 taken into account.

When a light enters into both the transparent conductive layer 18 and the second refraction layer 16 of the conductive film 1 with an incident angle, the light may be associated with a first reflectance R1. On the other hand, when the light only enters into the second refraction layer 16 with the same incident angle rather than into the transparent conductive layer 18 the light may be associated with a second reflectance R2. The difference between the first reflectance (R1) and the second reflectance (R2) may be lower than a first threshold value, which in one implementation is 0.5. Under this arrangement the difference in the reflectance is relatively small so that the etched traces may become not observable.

Further, when the light penetrates the transparent conductive layer 18 and the second refraction layer 16 of the conductive film 1 with the incident angle, the light may be associated with a first transmittance T1. And when the light only penetrates the second refraction layer 16 with the same incident angle, the light may be associated with a second transmittance T2. The difference between the first transmittance (T1) and the second transmittance (T2) may be lower than a second threshold value, which in one implementation may be lower than 0.5. In ensuring the relatively small difference in the transmittance between the light penetrating both the transparent conductive layer 18 and the second refraction layer 16 and the light penetrating the second refraction layer 16 only, the conductive film 1 according to the present invention may cause the etched traces formed over the course of the etching process not to be observed by the users since the light travels straight forward and when the difference in the light transmittance between T1 and T2 is relatively small enough regardless of whether the light enters into the conductive film 1 from one surface of the substrate 10 and passes through the transparent conductive layer 18 and/or the second refraction layer 16 or from the opposite (back) surface of the substrate 10.

The conductive film 1 may be attached to the light-emitting surface of a display device using the adhesive layer 20. The display device may include LCD, CRT, touch panel, or other electric devices having the aforementioned display devices. In this case, the users may not be interfered with said etched traces while watching images through the conductive film 1 of the present invention.

The descriptions illustrated *supra* set forth simply the preferred embodiments of the present invention; however, the characteristics of the present invention are by no means restricted thereto. All changes, alternations, or modifications conveniently considered by those skilled in the art are deemed to be encompassed within the scope of the present invention delineated by the following claims.

## Claims

1. A conductive film (1), comprising:
a substrate (10); and
a hard coated layer (12) disposed on the substrate (10) and made of a silicon material;
a first refraction layer (14) disposed on the hard coated layer (12);
a second refraction layer (16) disposed on the first refraction layer (14); and
a transparent conductive layer (18) disposed on the second refraction layer (16) and partially overlapping the second refraction layer (16);
wherein when a light enters into the transparent conductive layer (18) of the conductive film (1) with an incident angle, the first refraction layer (14) reflects the light by a first reflectance (R1), when the light enters into the second refraction layer (16) with the incident angle, the second refraction layer (16) reflects the light by a second reflectance (R2), and a difference between the first reflectance (R1) and the second reflectance (R2) is less than a first threshold value.

2. The conductive film (1) according to claim 1, wherein the silicon material weights 5% to 25% of the hard coated layer (12).

3. The conductive film (1) according to claim 2, wherein a thickness of the hard coated layer (12) ranges between 1 to 3 micrometers.

4. The conductive film (1) according to claim 2, wherein a thickness of the first refraction layer (14) ranges from 100Å to 300Å and a refractive index of the first refraction layer (14) is between 1.6 to 2.0.

5. The conductive film (1) according to claim 2, wherein a thickness of the second refraction layer (16) ranges from 500Å to 700Å, and a refractive index of the second refraction layer (16) ranges from 1.42 to 1.46.

6. The conductive film (1) according to claim 1, wherein the first threshold value is 0.5.

7. The conductive film (1) according to claim 1, wherein when the light enters into the transparent conductive layer (18) of the conductive film (1) with the incident angle, the light is associated with a first transmittance (T1), and when the light enters into the second refraction layer (16) with the incident angle, the light is associated with a second transmittance (T2), with a difference between the first transmittance (T1) and the second transmittance (T2) lower than a second threshold value.

8. The conductive film (1) according to claim 7, wherein the second threshold value is 0.5.

9. The conductive film (1) according to claim 1, wherein the substrate (10) is made of glass material, PET material, or a mixture of glass and PET materials, and a refractive index of the substrate is 1.52.
